# DEMANDE DE BREVET EUROPEEN

(11) **EP 1 288 788 A1**
(43) Date de publication de la demande: **05.03.2003**
(21) Numéro de dépôt: 02078422.9
(22) Date de dépôt: 19.08.2002
(51) Int. Cl.: G06F 17/14

(54) **Dispositif de calcul de transformées**

(30) Priorité: 21.08.2001 FR 0110958
(71) Demandeur: Koninklijke Philips Electronics N.V., 5621 BA Eindhoven (NL)
(72) Inventeur: Gay-Bellile, Olivier, 75008 Paris (FR); DuJardin, Eric, 75008 Paris (FR)
(74) Mandataire: Landousy, Christian

(57) **Abrégé**

La présente invention concerne un dispositif de calcul (FFTP) de transformées discrètes. Le dispositif comporte une mémoire locale (RAM2) pour enregistrer des résultats de calculs de sous-transformées, un calcul de sous-transformée comprenant plusieurs couches de calcul. Le dispositif est caractérisé par des moyens de calcul (CAL_M) aptes à entrelacer des couches de calcul de deux ou plusieurs sous-transformées consécutives de même taille.

## Description

La présente invention concerne un dispositif de calcul de transformées discrètes comprenant des sous-transformées, ledit dispositif comportant une mémoire locale pour enregistrer des résultats de calculs de sous-transformées, un calcul de sous-transformée comprenant plusieurs couches de calcul. Elle concerne également un procédé de calcul adapté audit dispositif.
Elle trouve une application particulière notamment dans un décodage de canal lors de transmissions terrestres de signaux.

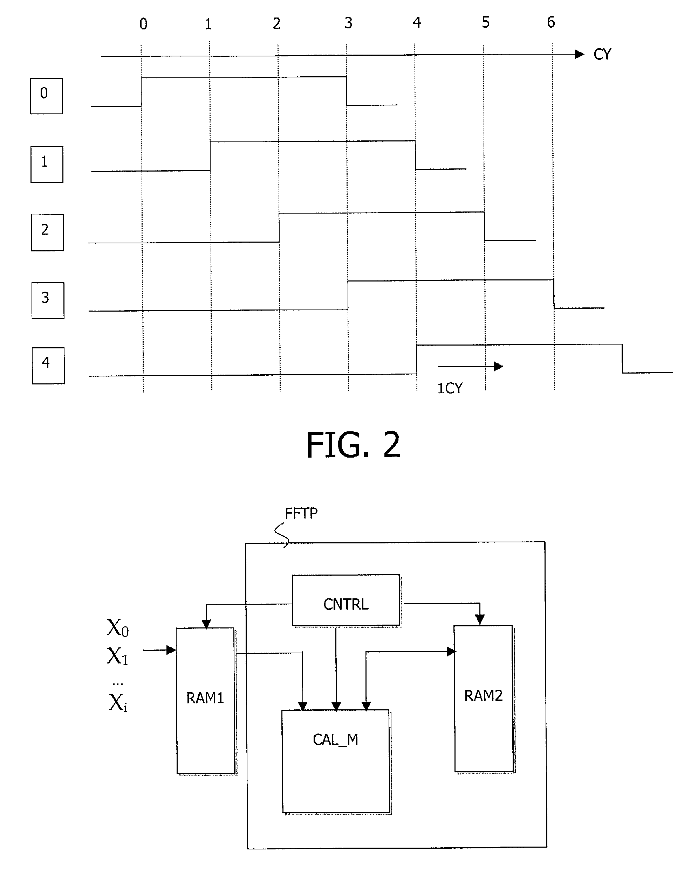

Le document « A power-efficient Single-Chip OFDM Demodulator and Channel Decoder for multimedia Broadcasting » édité par l'organisme IEEE International Solid-State Circuits en 1998 et de numéro 0-7803-4344-1, décrit un dispositif de calcul de transformées discrètes, ici des transformées de Fourier dans un récepteur OFDM (« Orthogonal Frequency Division Multiplexing »). Une transformée de Fourier a une taille variable de 1024 jusqu'à 8192 points ou échantillons pour un récepteur OFDM. Lorsque ledit récepteur reçoit un signal, il le reçoit sous forme de paquets d'échantillons dans une mémoire globale, les paquets étant de taille variable selon la norme utilisée. Dans la norme DVB-T (« Digital Video Broadcasting Terrestrial »), éditée par l'ETSI (« European Telecommunications Standard Institute »), qui utilise des récepteurs OFDM, la taille de paquets est de 2 Kilo-octets ou 8 Kilo-octets. Le récepteur comporte un dispositif de calcul permettant de calculer une transformée de Fourier sur les échantillons reçus d'un paquet.
Le calcul d'une transformée se décompose en plusieurs calculs de sous-transformées. Des résultats intermédiaires et finaux de ces calculs de sous-transformées sont enregistrés dans la mémoire locale. Ladite mémoire locale est ainsi utilisée à une fréquence plus grande que la mémoire globale. Un calcul de sous-transformée se décompose lui-même en plusieurs couches de calculs élémentaires appelés papillons (dans la langue anglaise « butterfly»), un calcul papillon nécessitant deux données d'entrée et fournissant deux données calculées de sortie. Un module élémentaire permet de calculer un papillon, il comporte des additionneurs et des multiplieurs.
Un état de la technique bien connu de calcul de transformée est l'utilisation d'un dispositif de calcul de transformées discrètes tel qu'un processeur pipeline. Afin d'effectuer les multiplications et additions du papillon en parallèle, le processeur exécute l'ensemble des calculs papillons d'une couche d'une sous-transformée en effectuant un calcul papillon à chaque cycle d'horloge, puis il effectue l'ensemble des calculs papillons de la couche suivante de la sous-transformée etc.... Un calcul papillon s'effectue avec une certaine latence, la latence étant un nombre de cycles d'horloge à attendre entre une donnée d'entrée et une donnée calculée de sortie d'un calcul papillon.
Cet état de la technique comporte un problème de dépendance de données entre des calculs d'une sous-transformée qui entraîne une interruption du processeur.

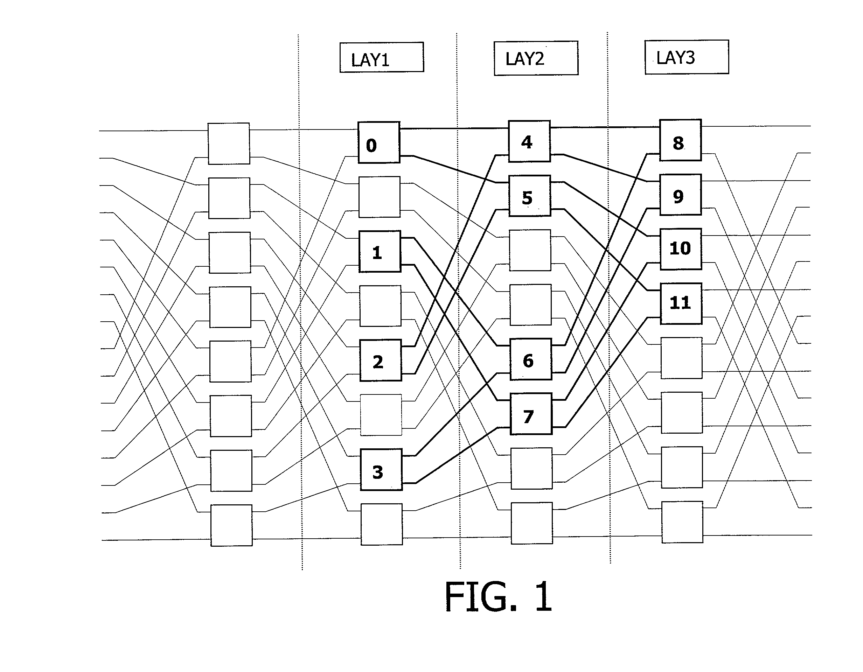

La figure 1 montre une telle dépendance. Sur la figure 1, est représentée un réseau d'interconnexion d'une transformée de Fourier discrète 16 points. Ladite transformée se décompose en deux sous-transformées de 8 points chacune. Une sous-transformée 8 points comporte 3 couches LAY1, LAY2 et LAY3 de calculs papillons. 12 calculs papillons doivent être calculés consécutivement pour réaliser une sous-transformée de Fourier 8 points, soit 4 papillons pour une couche LAY. Les papillons utilisés pour commencer le calcul d'une sous-transformée sont représentés par des blocs noirs sur la figure. Les papillons utilisés sont calculés dans un ordre optimal, ordre représenté par un numéro à l'intérieur dudit bloc.
Prenons l'exemple du papillon labellisé 4 qui est le premier à être calculé dans la seconde couche LAY2 de la sous-transformée 8 points. Ce papillon labellisé 4 nécessite deux données d'entrée provenant de deux papillons calculés 0 et 1 de la première couche LAY1. Comme le montre la figure 2, à chaque cycle CY, le processeur effectue un calcul papillon. Il faut attendre 4 cycles avant de commencer le calcul du papillon labellisé 4. Cependant, comme dans une couche LAY, il n'y a que 4 calculs de papillons, si la latence est supérieure à 2, les données, provenant des papillons 0 et 1, nécessaires pour le calcul du papillon 4 arrivent en retard. Ainsi, comme on peut le voir sur la figure 2, si la latence est égale à 3, lesdites données arrivent avec un cycle de retard. En conséquence, afin de calculer le papillon labellisé 4, le processeur doit attendre 1 cycle avant de pouvoir exécuter ledit papillon. De façon générale, dans cet exemple, le processeur doit attendre L-2 cycles avant de pouvoir effectuer tout calcul papillon de la deuxième couche LAY2. Le processeur est donc interrompu dans ses calculs.

Aussi un problème technique à résoudre par la présente invention est de proposer un dispositif de calcul de transformées discrètes comprenant des sous-transformées, ledit dispositif comportant une mémoire locale pour enregistrer des résultats de calculs de sous-transformées, un calcul de sous-transformée comprenant plusieurs couches de calcul, ainsi qu'un procédé de calcul associé, qui permettent d'éviter le problème d'attente du dispositif lors d'un calcul de sous-transformée.

Une solution au problème technique posé se caractérise, selon un premier objet de la présente invention, en ce que le dispositif de calcul comporte des moyens de calcul aptes à entrelacer des couches de calcul d'une première sous-transformée et d'une deuxième sous-transformée.

Selon un second objet de la présente invention, cette solution se caractérise, en ce que le procédé de calcul comporte une étape d'entrelacement de couches de calcul d'une première sous-transformée et d'une deuxième sous-transformée.
Ainsi, comme on le verra en détail plus loin, un tel entrelacement permet d'augmenter le temps de calcul entre deux couches consécutives. En conséquence, une donnée utilisée pour un module élémentaire d'une sous-transformée aura plus de temps pour être acheminée d'un module élémentaire à un autre et il n'y aura plus besoin d'interrompre le processeur.

La description qui suit, en regard des dessins annexés, le tout donné à titre d'exemple non limitatif, fera bien comprendre en quoi consiste l'invention.
- la Fig. 1 illustre de façon schématique un réseau d'interconnexion d'un calcul de transformée discrète effectué par un dispositif selon un état de la technique antérieur connu,
- la Fig. 2 est un diagramme représentant un ensemble de cycles d'exécution de calculs élémentaires effectués par le dispositif de calcul de l'état de la technique de la figure 1,
- la Fig. 3 est un schéma d'un dispositif de calcul selon l'invention,
- la Fig. 4a représente un calcul de transformée discrète selon le dispositif de la figure 3,
- la Fig. 4b représente des détails du calcul de transformée discrète de la figure 4b selon le dispositif de la figure 3,
- la Fig. 5 illustre de façon schématique un réseau d'interconnexion d'un calcul de transformée discrète effectué par le dispositif de calcul de la figure 3, et
- la Fig. 6 est un diagramme représentant un ensemble de cycles d'exécution de calculs élémentaires effectués par le dispositif de calcul de la figure 3.

Le présent exposé de l'invention a trait à un exemple de dispositif de calcul de transformées discrètes dans un récepteur utilisé dans le domaine de la télévision terrestre.
Dans le domaine des transmissions de signaux sur un canal (non représenté), en particulier dans le domaine de la télévision terrestre, un émetteur et un récepteur sont utilisés dans des systèmes de transmissions. L'émetteur effectue une modulation de signal transformant un signal numérique en signal analogique et envoie ledit signal sur le canal. En sortie du canal, le signal est reçu par le récepteur qui effectue une démodulation de signal transformant le signal analogique en un signal numérique.
Dans le cas de la norme DVB-T (« Digital Video Broadcasting Terrestrial »), différentes techniques sont utilisées telle que la technique OFDM (« Orthogonal Frequency Division Multiplexing ») en Europe lors d'un traitement de démodulation. Cette technique utilise en particulier des calculs de transformées discrètes de Fourier rapides.

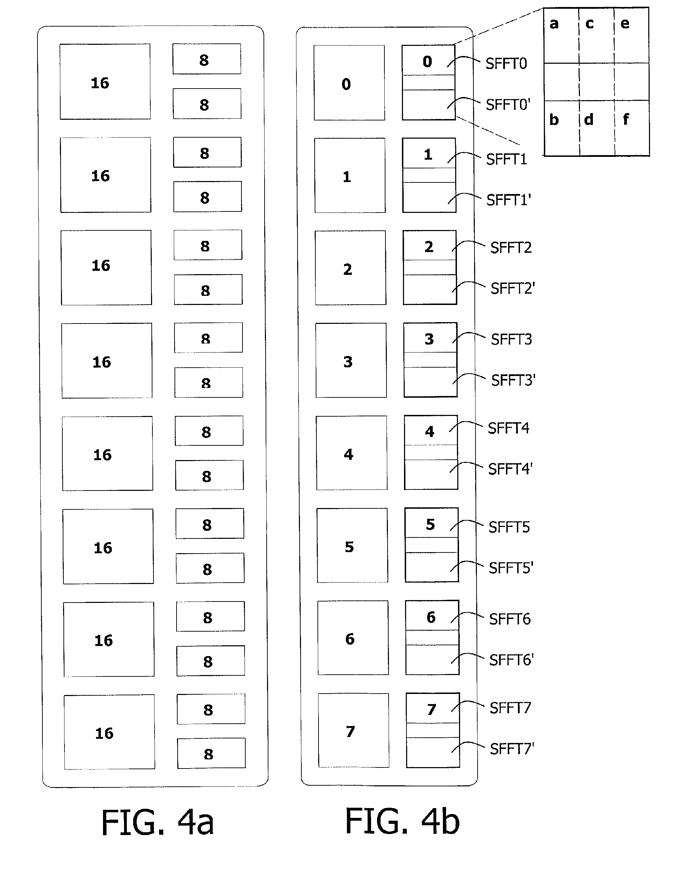

Lors d'une réception d'un signal numérique, le récepteur le reçoit sous forme de paquets d'échantillons Xᵢ (i ≥ 0). La réception des échantillons se fait, pour un récepteur OFDM de la norme DVB-T comprenant un démodulateur, par paquets de taille 2 Kilo-octets ou 8 Kilo-octets. Les paquets sont démodulés par le récepteur.
La démodulation est effectuée au moyen d'un dispositif de calcul FFTP de transformées discrètes compris dans ledit récepteur, une transformée discrète comprenant des sous-transformées. Ledit dispositif de calcul FFTP est représenté à la figure 3, c'est en général un processeur. Il comporte une mémoire locale RAM2, des moyens de contrôle CNTRL et des moyens de calcul CAL_M. Le dispositif de calcul FFTP de transformées accède également à une mémoire globale externe RAM1.
La mémoire globale RAM1 permet de stocker des échantillons Xi du signal reçu, et la mémoire locale RAM2 permet d'enregistrer des résultats de calculs de sous-transformées, un calcul de sous-transformée comprenant plusieurs couches de calcul LAY. Lesdites mémoires sont préférentiellement volatiles et réinscriptibles.

Afin de calculer une transformée discrète, on effectue les étapes suivantes. On prend l'exemple d'un calcul de transformée discrète de taille 128 points ou échantillons. Comme le montre l'exemple illustré aux figures 4a et 4b, un tel calcul de transformée peut se décomposer en 8 calculs de sous-transformées 16 points suivis de 16 calculs de sous-transformées 8 points. Une sous-transformée 8 points comporte 3 couches, chaque couche comprenant 4 calculs élémentaires à effectuer, un calcul élémentaire étant couramment appelé papillon ("butterfly" dans la langue anglaise), un calcul papillon nécessitant deux données d'entrée et fournissant deux données calculées de sortie. Un module élémentaire (non représenté) compris dans les moyens de calcul CAL_M permet de calculer un papillon. Un tel module comporte des additions et des multiplications et plusieurs registres. Un calcul papillon s'effectue avec une certaine latence L, la latence L étant un nombre de cycles d'horloge à attendre entre une donnée d'entrée et une donnée calculée de sortie d'un calcul papillon.

Dans une première étape, les moyens de contrôle CNTRL configurent la mémoire globale RAM1 et la mémoire locale RAM2 pour recevoir respectivement des échantillons Xᵢ de paquets et des résultats de calculs de transformées. La configuration se fait en fonction du nombre de transformées de Fourier utilisées lors d'un traitement de démodulation, les transformées ayant, le cas échéant, une taille variable, ici de 2 Kilo-octets ou 8 Kilo-octets. Cette étape de configuration étant connue de l'homme du métier, elle ne sera pas détaillée ici.

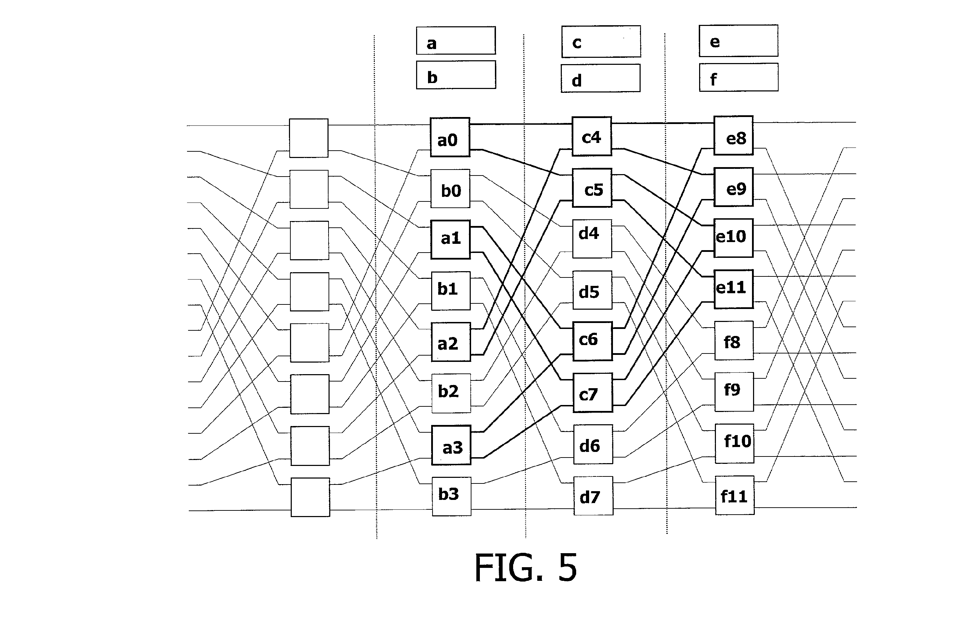

Dans une deuxième étape, les moyens de calcul CAL_M effectuent les calculs des sous-transformées en entrelaçant des couches de calcul d'une première sous-transformée et d'une deuxième sous-transformée, de façon alternée. Préférentiellement, l'entrelacement se fait entre deux sous-transformées consécutives de même taille. Ainsi, par exemple, pour les sous-transformées 8 points, le processeur commence les calculs des sous-transformées 8 points dans l'ordre indiqué à la figure 4b, i.e. en commençant par les deux premières sous-transformées, puis les deux suivantes etc. Ainsi, on a, par exemple, un entrelacement avec les deux premières sous-transformées 8 points labellisées SFFT0 et SFFT0'. Lesdites sous-transformées SFFT0 et SFFT0' comportent respectivement 3 couches labellisées a, c, e et b, d, f. Comme le montre la figure 5, Lesdites couches a, c, e et b, d, f comprennent respectivement 4 calculs élémentaires à effectuer. Ainsi, la couche a comprend les papillons labellisés a0, a1, a2 et a3; la couche c comprend les papillons labellisés c4, c5, c6 et c7; la couche e comprend les papillons labellisés e8, e9, e10 et e11. De même, la couche b comprend les papillons labellisés b0, b1, b2 et b3; la couche d comprend les papillons labellisés d4, d5, d6 et d7; la couche f comprend les papillons labellisés f8, f9, f10 et f11. Contrairement à l'état de la technique antérieur qui effectue ces calculs papillons dans l'ordre d'ordonnancement desdits papillons, le dispositif de calcul selon l'invention effectue les calculs papillons de la manière suivante :
- calcul de la première couche a de la première sous-transformée SFFT0, les calculs papillons de ladite couche étant effectués dans l'ordre indiqué sur la figure 5, soient calculs des papillons a0, puis a1, a2, et a3;
- calcul de la première couche b de la seconde sous-transformée SFFT0', les calculs papillons de ladite couche étant effectués dans l'ordre indiqué sur la figure 5, soient calculs des papillons b0, puis b1, b2, et b3;
- calcul de la seconde couche c de la première sous-transformée SFFT0, les calculs papillons de ladite couche étant effectués dans l'ordre indiqué sur la figure 5, soient calculs des papillons c4, puis c5, c6, et c7;
- calcul de la seconde couche d de la seconde sous-transformée SFFT0', les calculs papillons de ladite couche étant effectués dans l'ordre indiqué sur la figure 5, soient calculs des papillons d4, puis d5, d6, et d7;
- calcul de la troisième couche e de la première sous-transformée SFFT0, les calculs papillons de ladite couche étant effectués dans l'ordre indiqué sur la figure 5, soient calculs des papillons e8, puis e9, e10, et e11;
- calcul de la troisième couche f de la seconde sous-transformée SFFT0' les calculs papillons de ladite couche étant effectués dans l'ordre indiqué sur la figure 5, soient calculs des papillons f8, puis f9, f10, et f11; et ainsi de suite jusqu'à ce qu'il n'y ait plus de sous-transformée 8 points à calculer, soit jusqu'au sous-transformées SFFT7 et SFFT7'.
On notera que pour effectuer de tels calculs papillons, on utilise un algorithme appelé algorithme de Cooley-Tukey également connu sous le nom d'algorithme de réduction à base 2 ou à double radical (dans la langue anglaise « radix 2 »), un radical pouvant aller de 2 à 4. Un calcul de transformées utilisant un radical 2 requiert un nombre d'échantillons qui est une puissance de 2. Par exemple, pour un calcul d'une transformée de 2 Kilo-octets, on aura 256 calculs de sous-transformées 16 points (soient 32 calculs élémentaires de radical 2 par sous-transformée) et 256 calculs de sous-transformée de taille 8 (soient 12 calculs élémentaires de radical 2 par sous-transformée). Un calcul papillon étant bien connu de l'homme du métier et notamment l'algorithme de Cooley-Tukey, il ne sera donc pas décrit ici.

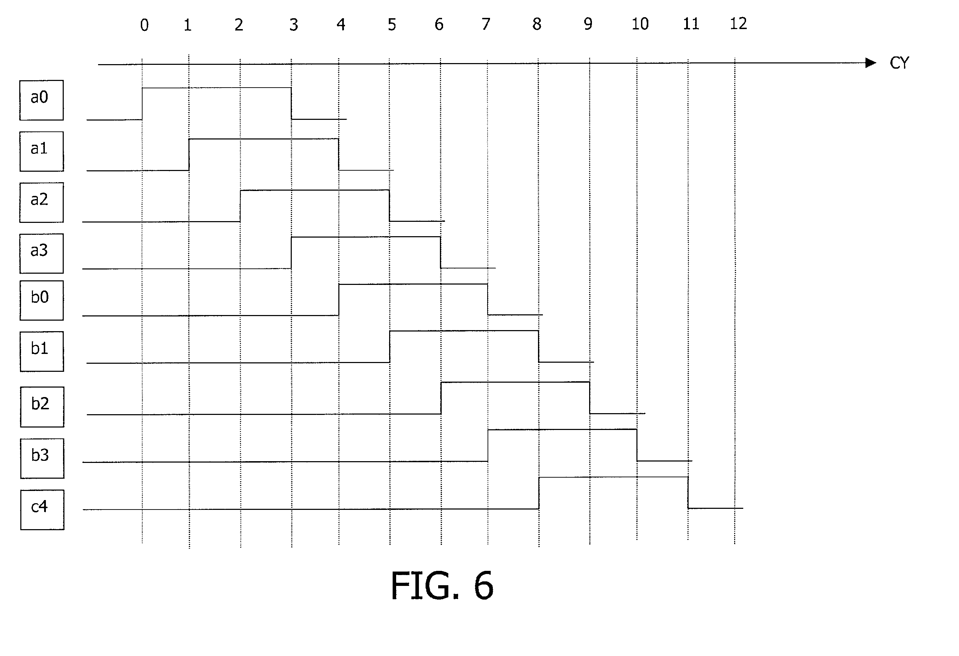

En rapport avec le schéma 5, dans le diagramme de la figure 6, on prend l'exemple du papillon labellisé c4 qui est le premier à être calculé dans la seconde couche c de la première sous-transformée 8 points SFFT0, la latence L étant égale à 3. Le papillon c4 nécessite les données des papillons a0 et a1. Comme on peut le voir, dans un premier temps, on calcule la première couche a de la première sous-transformée SFFT0, soient les papillons a0, a1, a2 et a3. Dans un deuxième temps, on calcule la première couche b de la seconde sous-transformée SFFT0', soient les papillons b0, b1, b2 et b3. Enfin, on calcule le papillon c4 au 8^{ème} cycle. Les données issues du calcul des papillons a0 et a1 de la première couche a ont, ici, le temps d'être transmises au papillon c4.

L'ordre d'ordonnancement des calculs entre deux sous-transformées décrit ci-dessus se base sur un ordre optimal de calcul pour une sous-transformée appelée dans la langue anglaise "perfect shuffle", Cette permutation ou ordre optimal pour une sous-transformée correspond à l'ordre croissant des blocs papillons et des couches. Ainsi, sur la figure 5 en gris, pour la première sous-transformée SFFT0, l'ordre optimal correspond aux calculs du 1^{er} bloc a0, du 2^{ème} bloc a1, du 3^{ème} bloc a2, du 4^{ème} bloc a3 de la 1^{ère} couche a, puis calculs du 1^{er} bloc c4, du 2^{ème} bloc c5, du 3^{ème} bloc c6, du 4^{ème} c7 de la 2^{ème} couche c, et enfin calculs du 1^{er} bloc e8, 2^{ème} e9, 3^{ème} bloc e10 et 4^{ème} bloc e11 de la 3^{ème} couche e. sur la figure 5, en blanc, pour la deuxième sous-transformée SFFT0', l'ordre optimal correspond aux calculs du 1^{er} bloc b0, du 2^{ème} bloc b1, du 3^{ème} bloc b2, du 4^{ème} bloc b3 de la 1^{ère} couche b, puis calculs du 1^{er} bloc d4, du 2^{ème} bloc d5, du 3^{ème} bloc d6, du 4^{ème} d7 de la 2^{ème} couche d, et enfin calculs du 1^{er} bloc f8, 2^{ème} f9, 3^{ème} bloc f10 et 4^{ème} bloc f11 de la 3^{ème} couche f.
Ainsi, pour une sous-transformée donnée, un papillon j d'une couche i+1 dépend des papillons j/2 et (j/2 + Ns/4) de la couche i de ladite transformée, Ns étant la taille de la sous-transformée à calculer. Ainsi, par exemple, le 2^{ème} papillon C6 de la 2^{ème} couche de la première sous-transformée SFFT0 dépend des papillons 2/2 = 1 et 2/2+8/4 = 3 de la 1^{ère} couche de ladite sous-transformée, soient des papillons a0 et a2. En conséquence, le temps entre un calcul d'un bloc d'une couche i et un calcul d'un bloc dépendant de la couche suivante i+1 correspond à un nombre de cycles Tdep (un bloc étant calculé par cycle), tel que : Tdep = Ns/2 - (j/2 + Ns/4) = j = Ns/4 + j - (j/2), Ns/2 étant le nombre de papillons à calculer dans une couche. Dans le pire des cas, lorsque j = 0, le temps Tdepmin minimum est égal à Ns/4. Or comme on doit avoir Tdep > L, cela équivaut à Ns> 4*L.
Aussi, avantageusement, pour une sous-transformée calculée au moyen d'une méthode à permutation optimale de radical 2, lorsque la taille d'une sous-transformée est inférieure ou égale à 4 fois la latence L d'un calcul papillon de radical 2 d'une sous-transformée, les moyens de calcul CAL_M effectuent un entrelacement sur cette sous-transformée, comme nous venons de le voir. Autrement dit, lorsque la taille d'une sous-transformée est supérieure à 4 fois la latence L, les moyens de calcul CAL_M n'effectuent pas d'entrelacement.

Ainsi, dans l'exemple cité ci-dessus, pour les sous-transformées 16 points, lorsqu'on a une latence L égale à 3, il n'est pas nécessaire d'effectuer un tel entrelacement. En effet, pour une couche d'une sous-transformée 16 points, il faut calculer 8 papillons. De ce fait, pour une latence de 3, les données nécessaires aux différents calculs ont le temps d'être transmises pour un papillon. On a effectivement la taille de la sous-transformée qui est supérieure à 4 fois la latence L. Dans ce cas, il n'est donc pas nécessaire d'effectuer d'entrelacement pour rallonger le temps de transmission de données pour des sous-transformées 16 points. Ainsi, le processeur, préalablement ou postérieurement aux calculs des sous-transformées 8 points, effectue le calcul des 8 sous-transformées 16 points, sans entrelacement, dans l'ordre indiqué à la figure 4a.
On notera par ailleurs, que lorsque le temps de latence L est égal à 1, c'est à dire que dès que l'on commence un calcul, on obtient un résultat, les moyens de calcul CAL_M n'effectuent jamais d'entrelacement, puisque dans ce cas, toutes les données d'une couche seront disponibles dès que les calculs des papillons de la couche suivante commenceront.

Ainsi, un tel entrelacement a pour avantage de laisser du temps aux données nécessaires pour les calculs papillons, d'être transmises d'un papillon à un autre, et ce sans que le processeur FFTP attende pendant un cycle ou plus la transmission de telles données.
Enfin, l'invention a pour avantage supplémentaire d'utiliser une mémoire locale RAM2 et par suite de moins utiliser la mémoire globale RAM1. En effet, à chaque calcul de sous-transformée, c'est la mémoire locale RAM2 qui est utilisée. Le dispositif de calcul FFTP de transformées n'accède essentiellement à la mémoire globale RAM1 que pour des transferts de résultats de sous-transformées. Ainsi, non seulement, il y a une diminution de consommation d'énergie, un accès à la mémoire locale consommant moins q'un accès à la mémoire globale, mais aussi, une libération de la mémoire globale pour des accès par des dispositifs autres que le dispositif de calcul de transformées FFTP.

Bien entendu, le cadre de l'invention n'est nullement limité au mode de réalisation décrit et s'étend, par exemple, à d'autres modes de réalisation dans lesquels, d'autres algorithmes sont utilisés.
De même, l'invention peut s'appliquer à des démodulateurs autres que ceux basés sur la technique OFDM. Par exemple, elle peut s'appliquer à la technique VSB (« Vestigial Sideband Modulation ») utilisée aux Etats-Unis dans un domaine fréquentiel. Cette technique VSB utilise également des transformées de Fourier lorsqu'elle est utilisée dans un domaine fréquentiel. Lors d'une réception d'un signal, le récepteur reçoit un signal numérique sous forme de paquets d'échantillons de 1 Kilo-octets ou 2 Kilo-octets.
Bien entendu, l'invention n'est nullement limitée aux transformées de Fourier, elle peut s'étendre à d'autres transformées discrètes telle qu'une transformée en cosinus discret DCT utilisée, par exemple, dans une application de traitement vidéo.
Bien entendu, l'invention n'est nullement limitée au domaine de la télévision terrestre, elle peut s'étendre à d'autres domaines, notamment à tous ceux qui utilisent un système utilisant des transformées discrètes.

Aucun signe de référence dans le présent texte ne doit être interprété comme limitant ledit texte. Le verbe "comprendre" et ses conjugaisons ne doivent également pas être interprétés de façon limitative, i.e. ils ne doivent pas être interprétés comme excluant la présence d'autres étapes ou éléments outre ceux définis dans la description, ou encore, comme excluant une pluralité d'étapes ou d'éléments déjà listés après ledit verbe et précédés du mot "un" ou "une".

## Revendications

1. Dispositif (FFTP) de calcul de transformées discrètes comprenant des sous-transformées, ledit dispositif comportant une mémoire locale (RAM2) pour enregistrer des résultats de calculs de sous-transformées, un calcul de sous-transformée comprenant plusieurs couches de calcul, **caractérisé en ce qu'**il comporte des moyens de calcul (CAL_M) aptes à entrelacer des couches de calcul d'une première sous-transformée et d'une deuxième sous-transformée.

2. Dispositif (FFTP) de calcul selon la revendication 1, **caractérisé en ce que** les moyens de calcul (CAL_M) sont aptes à effectuer un entrelacement entre deux sous-transformées consécutives de même taille.

3. Dispositif (FFTP) de calcul selon la revendication 1, **caractérisé en ce que** les moyens de calcul (CAL_M) effectuent un entrelacement si une sous-transformée possède une taille inférieure ou égale à quatre fois une latence (L) d'un calcul élémentaire d'une sous-transformée.

4. Dispositif (FFTP) de calcul selon la revendication 3, **caractérisé en ce qu'**une sous-transformée est basée sur méthode de calcul à permutation optimale.

5. Procédé de calcul de transformées discrètes comprenant des sous-transformées, ledit procédé étant apte à enregistrer des résultats de calcul de sous-transformées dans une mémoire locale (RAM2), **caractérisé en ce qu'**il comporte une étape d'entrelacement de couches de calcul d'une première sous-transformée et d'une deuxième sous-transformée.

6. Procédé de calcul de transformées selon la revendication 5, **caractérisé en ce que** l'entrelacement est effectué entre deux sous-transformées consécutives de même taille.

7. Procédé de calcul de transformées selon la revendication 5, **caractérisé en ce que** l'entrelacement est effectué si une sous-transformée possède une taille inférieure ou égale à quatre fois une latence (L) d'un calcul élémentaire d'une sous-transformée.

8. Procédé de calcul de transformées selon la revendication 7, **caractérisé en ce qu'**une sous-transformée est basée sur une méthode de calcul à permutation optimale.

9. Récepteur comportant un démodulateur avec un dispositif (FFTP) de calcul de transformées discrètes comprenant des sous-transformées selon la revendication 1, ledit récepteur étant apte à recevoir un paquet d'échantillons, ledit paquet étant démodulés au moyen dudit dispositif (FFTP).

10. Système de transmission comprenant un émetteur pour moduler un signal et l'envoyer au travers d'un canal à un récepteur, et un tel récepteur pour démoduler ledit signal au moyen d'un dispositif (FFTP) de calcul selon la revendication 1.
